# EUROPEAN PATENT SPECIFICATION

(11) **EP 0 549 571 B1**
(45) Date of publication and mention of the grant of the patent: **20.09.1995**
(21) Application number: 93200300.7
(22) Date of filing: 28.12.1990
(51) Int. Cl.: F02B 75/20, F02F 1/38, F02B 75/00

(54) **A vertical internal combustion engine having overhead valves**
Senkrechte Brennkraftmaschine mit im Zylinderkopf liegenden Ventilen
Moteur à combustion interne vertical avec agencement des soupapes dans la culasse

(30) Priority: 22.02.1990 JP 41522/90; 27.03.1990 JP 30493/90 U
(43) Date of publication of application: 30.06.1993
(62) Divisional of application: 90314384.0
(73) Proprietor: MITSUBISHI JUKOGYO KABUSHIKI KAISHA, Tokyo (JP)
(72) Inventor: Kobayashi, Kazuyuki, c/o Nagoya Machinery Works, Nakamura-ku, Nagoya, Aichi-Pref. (JP)
(74) Representative: W.P. Thompson & Co.

(56) References cited:
- EP-A- 0 279 446
- FR-A- 2 534 626
- US-A- 4 864 981
- US-A- 4 893 597

## Description

The present invention relates to a vertical internal combustion engine having overhead valves, whose crankshaft is arranged vertically.

One example of a known vertical internal combustion engine is shown in EP-A- 0 279 446. This engine has overhead valves disposed in a cylinder head, a vertically disposed crankshaft and a horizontally disposed cylinder, and comprises a carburettor arranged on one side of the cylinder, and an exhaust muffler arranged on the other side of the cylinder, opposite the carburettor,
a suction valve arranged in a lower part of the cylinder head and an exhaust valve arranged in an upper part of the cylinder head,
a suction port which leads downwardly to said suction valve, opens on one side of the cylinder head and is connected to the carburettor, and
an exhaust port which leads downwardly to said exhaust valve and opens in such a way that an extension of the centre line of the exhaust port crosses diagonally from above the horizontal plane which contains the axis of said horizontally disposed cylinder. The exhaust muffler is spaced from the cylinder head and connected thereto by way of an intermediate exhaust pipe.

Another example of a conventional vertical internal combustion engine having overhead valves (FR-A- 2 534 626) is illustrated in Figs. 4 to 6 of the accompanying drawings. Reference numeral 1 denotes a cylinder block comprising a cylinder barrel 1A, whose centre line is level, a cylinder head 1B and a cylinder head cover 1C, and 2 denotes a crankcase connected with cylinder barrel 1A of cylinder block 1. A crankshaft 4 is supported vertically in the centre of the crankcase 2 by bearings 3, 5 denotes a piston, and 6 denotes a connecting rod.

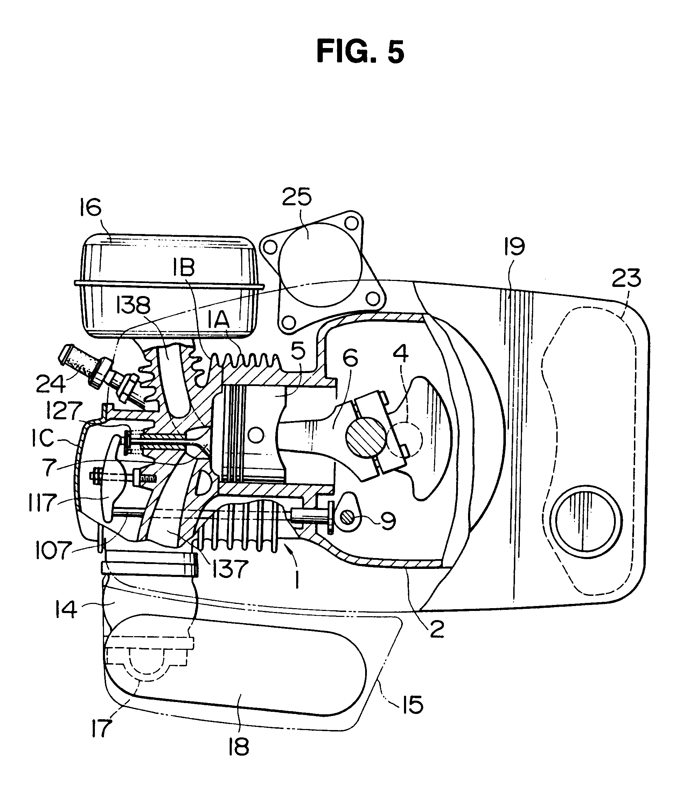

In the cylinder head 1B, a suction valve 7 and exhaust valve 8 are arranged as overhead valves. The suction valve 7 and exhaust valve 8 are part of a valve mechanism which includes a camshaft 9 (shown in Fig.5) rotating synchronously with crankshaft 4, a pair of push rods 107 and 108 in upper and lower parts of the cylinder head, which are caused to reciprocate in a straight line by the rotation of the camshaft 9, a pair of rocker arms 117 and 118 which are caused to move up and down by the actuation of said push rods 107 and 108, and a return spring 127 associated with each valve 7 and 8.

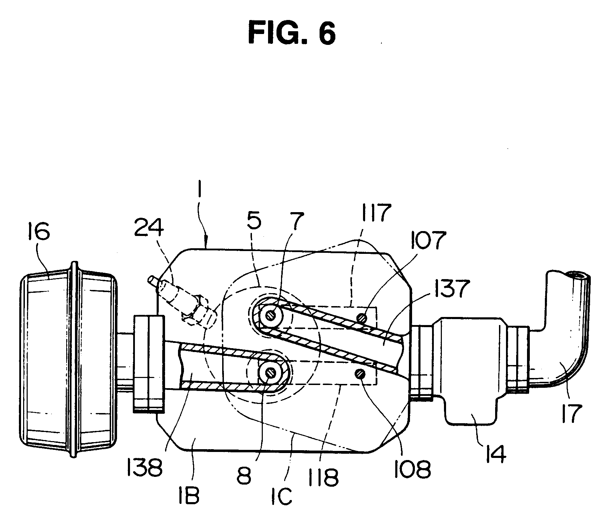

Viewed towards the cylinder-head cover 1C, a suction port 137 opens on the right-hand side of cylinder head 1B, and an exhaust port 138 opens on the left-hand side. That is, suction port 137 and exhaust port 138 open such that suction and exhaust gases may flow crosswise. The suction valve 7 and exhaust valve 8 are arranged parallel to each other in the same vertical plane, with suction valve 7 in the higher position. As shown in Fig. 6, suction port 137 lies between push rod 107 for the suction valve and push rod 108 for the exhaust valve, and it slopes up to suction valve 7 along an imaginary straight line.

In the cylinder head 1B, the bottom of the opening of suction port 137 is lower in position than the top of the opening of exhaust port 138 (see Fig.6).

The location at which a carburettor 14 is connected with the opening of suction port 137 is at the same height as the location at which an exhaust muffler 16 is connected with the opening of exhaust port 138.

Carburettor 14 is connected directly with the opening of the suction port 137, an air cleaner 15 is connected with said carburettor 14, and exhaust muffler 16 is connected with the opening of exhaust port 138. Reference number 17 denotes an elbow connecting carburettor 14 with air cleaner 15, and 18 is an air cleaner element.

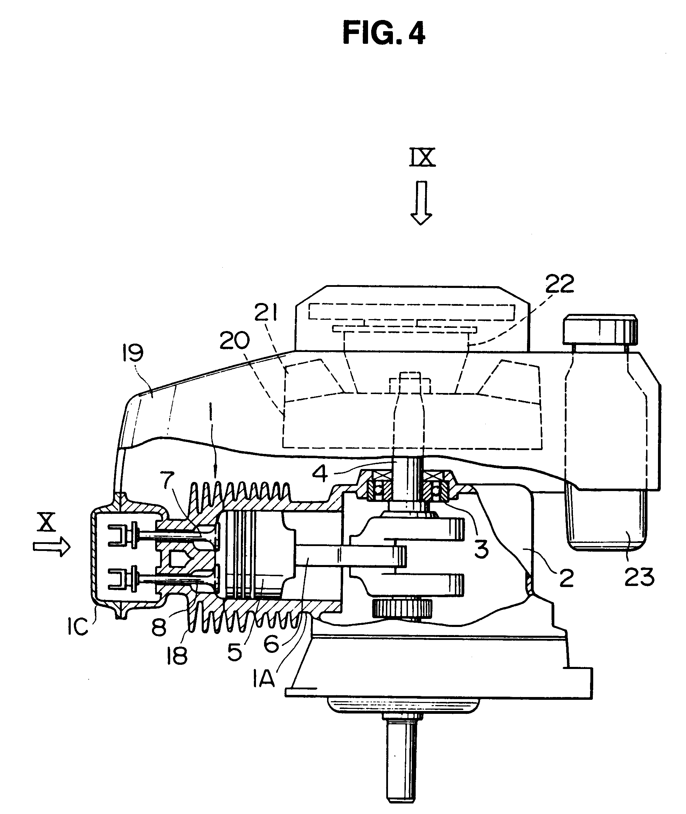

As shown in Figs. 4 and 5, a baffle cover 19 is placed over the cylinder block 1 and crankcase 2, wherein crankshaft 4, flywheel 20 and fan 21 are arranged. Numeral 22 is a recoil starter, and 23 is a fuel tank. Spark plug 24 and starter motor 25 are arranged on the same side of the block as exhaust muffler 16.

However, this conventional vertical internal combustion engine having overhead valves has problems as follows.
1. The position for installing the spark plug 24 is limited. That is, since suction port 137 and exhaust port 138 open on the two sides of cylinder head 1B, respectively, the position for disconnecting an ignition plug inserted in the cylinder head must be turned upward at as sharp an angle as possible away from exhaust port 138 so as to facilitate maintenance. This is because exhaust port 138 is heated by exhaust heat when the engine is being operated.
2. The combustion chamber of cylinder head 1B cannot be cooled down sufficiently.
3. The exhaust system, which is positioned to the leeside of cooling air, may not be cooled down sufficiently. Among other things, it is impossible to cool down the region around the exhaust valve, and the valve guide may fall off due partly to the difference in thermal expansion between the valve guide and the cylinder head, both of which are fixed in the cylinder head.
4. The suction part 137 lies on an upward gradient, and fuel in the form of fluid drops tends to flow back toward carburettor 14.

In order to overcome the above stated problems, it is an object of the present invention to provide a vertical internal combustion engine having overhead valves which improves the fluidity of air-fuel mixture in the engine, enhances the cooling effect of cooling air, and improves maintenance.

In accordance with the present invention, there is provided a vertical internal combustion engine having overhead valves disposed in a cylinder head, a vertically disposed crankshaft and a horizontally disposed cylinder, and comprises a carburettor arranged on one side of the cylinder, an exhaust muffler arranged on the other side of the cylinder, opposite the carburettor,
a suction valve arranged in a lower part of the cylinder head and an exhaust valve arranged in an upper part of the cylinder head,
a suction port which leads downwardly to said suction valve, opens on one side of the cylinder head and is connected to the carburettor, and
and an exhaust port which leads downwardly to said exhaust valve and opens in such a way that an extension of the centre line of the exhaust port crosses diagonally from above the horizontal plane which contains the axis of said horizontally disposed cylinder, characterised in that:
said extension of said centre line of the exhaust port extends through the centre of said exhaust valve;
said suction port extends between a pair of push rods disposed respectively in upper and lower parts of the cylinder head;
an ignition plug socket for an ignition plug is disposed on the cylinder head beneath the exhaust port and on the opposite side of the cylinder head to that containing the suction port; and
the exhaust muffler is of curved configuration and is fixed directly to the exhaust port at an upper surface of the cylinder head, with a gasket therebetween but without an intermediate exhaust pipe;
the engine side of the said curved exhaust muffler being arranged over and close to one side of said cylinder head so as to serve as a guide for directing cooling air over said exhaust port and said plug.

An engine constructed in accordance with the present invention can produce the following effects:
1. Since the exhaust port opens on top of the cylinder head, that is, in the path (windward side) of cooling air, and the muffler is curved around the lower part of the left-hand side of the cylinder head, a higher degree of freedom for arranging the ignition plug is obtained and maintenance is facilitated.
2. Since the exhaust port in the cylinder head, whose temperature is high, is in the path of cooling air (in the direction of arrow A in Fig.6), the whole cylinder head may be effectively cooled down.
3. The cooling air flows directly around an exhaust valve, thereby preventing overheating in the valve guide.
4. The exhaust port of the cylinder head is shorter than the conventional one and heat may not escape from the muffler due to a gasket, whereby the exhaust system in the cylinder head accumulates less heat and the cooling effect is improved. In addition, since the muffler itself is a guide for cooling air, the muffler may be effectively cooled down.

The invention is described further hereinafter, by way of example only, with reference to the accompanying drawings, in which:-
Fig.1 is a fragmentary, horizontal, cross-sectional view of a second embodiment of a vertical internal combustion engine having an overhead valve in accordance with the present invention;
Fig.2 is a view seen from the direction of arrow VI in Fig.1;
Fig.3 is a vertical, cross-sectional view of a suction port and an exhaust port in the cylinder head in the second embodiment;
Fig.4 is a fragmentary, cut-away side view of a conventional vertical internal combustion engine having overhead valves;
Fig.5 is a fragmentary, cut-away top view seen from arrow IX in Fig.4; and
Fig.6 is a fragmentary, cut-away front view seen from arrrow X in Fig.4.

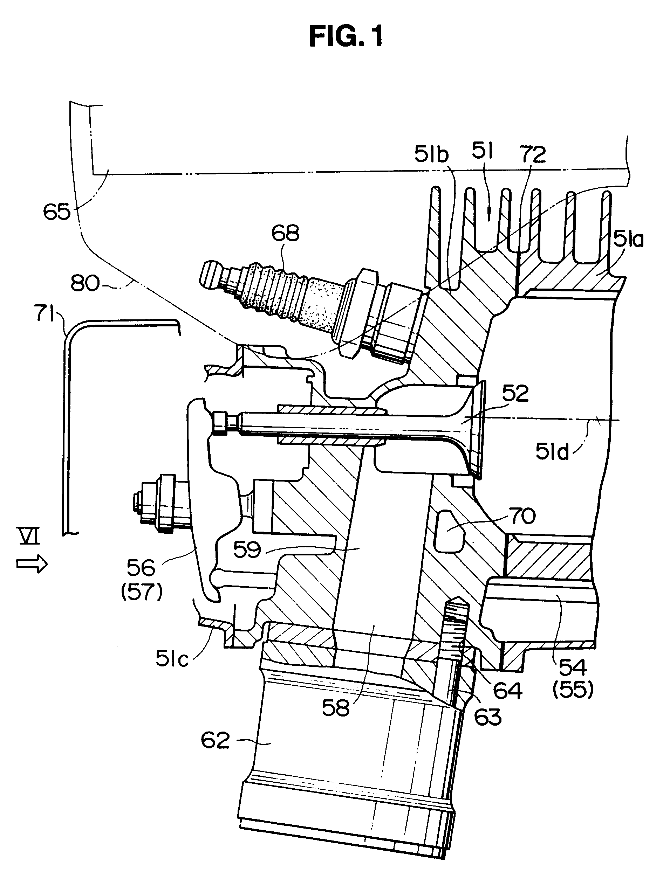

Referring now to Figs. 1 to 3 in detail, reference 51 denotes a cylinder block comprising a cylinder barrel 51a, a cylinder head 51b, and a cylinder-head cover 51c. Centre line 51d of cylinder barrel 51a is horizontal.

Reference 52 is a suction (inlet) valve and 53 is an exhaust valve, which are arranged as a pair of overhead valves in lower and upper parts of cylinder head 51b, respectively.

A pair of push rods 54 and 55 are arranged in the lower and upper parts of the cylinder head, and are caused to reciprocate as a camshaft rotates synchronously with a crankshaft (not shown in any figure). The camshaft, push rods 54 and 55, and a pair of rocker arms 56 and 57 caused to move up and down by the actuation of the rods 54 and 55, constitute a valve mechanism.

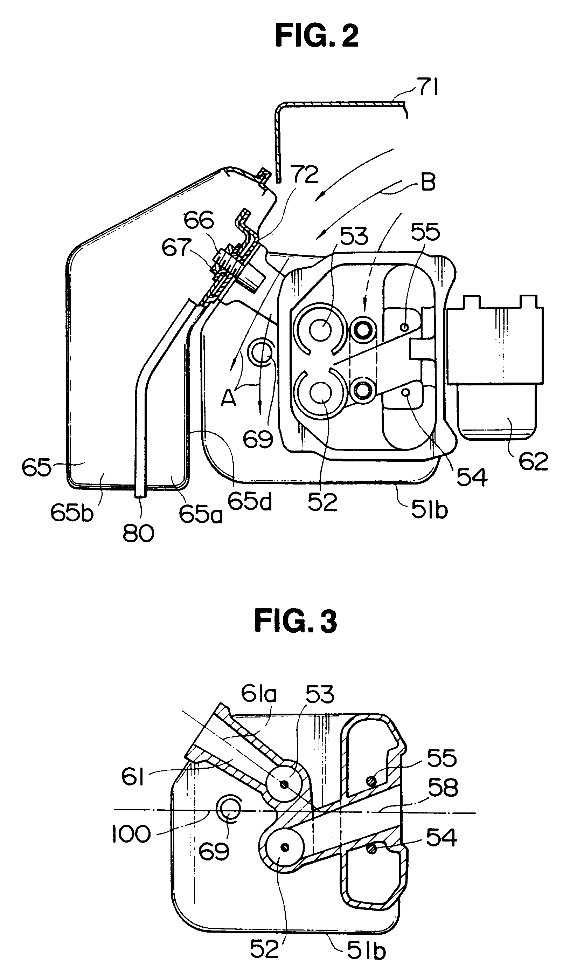

Reference 58 is a suction port opening on the right-hand side of cylinder head 51b (on the left in the figures) whose other end is connected with suction valve 52. As shown in Fig.1, opening 70 for passing cooling air in the direction of an output shaft is surrounded by the wall of the suction port, the wall where the cylinder is installed, and the circumferential wall of the hole for the push rods. Reference 61 is an exhaust port and, as shown in Fig.3, the centre line 61a of the exhaust port goes through exhaust valve 53 and crosses diagonally from above the horizontal plane 100 which contains the cylinder axis 51d. The exhaust port 61 may cross horizontal plane 100 vertically.

As shown in Fig.2, the suction valve 52 and the exhaust valve 53 are arranged parallel to each other in the same vertical plane, with the suction valve 52 in the lower position.

Suction port 58 extends between the push rod 54 for the suction valve and the push rod 55 for the exhaust valve (see Fig.3).

Reference 62 is a carburettor and, as shown in Fig.1, is fixed to cylinder head 51b by screwing a bolt 63 into a tapped hole 64 in cylinder head 51b.

As shown in Fig.2, reference 65 is a muffler comprising a right-hand body part 65a and a left-hand body part 65b, the right-hand body part 65a being fixed over the left-hand body part 65b. The muffler 65 is fixed to the cylinder head 51b by a bolt 66 and nut 67, and a gasket 72 is placed therebetween.

Reference 68 is an ignition plug fixed into tapped hole 69. Reference 71 is a fan cover and 72 is a cylinder head gasket.

During the operation of a vertical internal combustion engine having overhead valves comprising the above-described elements, cooling air sent by cooling fan 21 (shown in Fig.4) flows in the direction of arrow B (shown in Fig.2) inside fan cover 71 and reaches cylinder block 51. The cooling air is then guided toward engine side 65d of muffler 65 and flows in the direction of arrow A, whereby the whole cylinder head 51b, including exhaust port 61 and ignition plug 68, is cooled down.

This embodiment of the present invention includes the above-described elements and produces the following effects.
(1) Exhaust port 61 opens on the upper part of the cylinder head and curved muffler 65 is installed over the left-hand side of the cylinder head, whereby a higher degree of freedom for installing an ignition plug is obtained and maintenance is facilitated.
(2) Cooling air flows directly to high-temperature exhaust port 61 and muffler 65 and is guided further around exhaust valve 53, whereby overheating of the valve guide may be prevented and the valve guide never falls off.
(3) The exhaust port in the cylinder head is shorter than the conventional one and heat may not escape from the muffler due to gasket 72, whereby the exhaust system in the cylinder head accumulates less heat and the cooling effect is enhanced.

## Claims

1. A vertical internal combustion engine having overhead valves disposed in a cylinder head, a vertically disposed crankshaft and a horizontally disposed cylinder, and comprising a carburettor (62) arranged on one side of the cylinder, an exhaust muffler (65) arranged on the other side of the cylinder, opposite the carburettor,
a suction valve (52) arranged in a lower part of the cylinder head (51b) and an exhaust valve (53) is arranged in an upper part of the cylinder head (51b); a suction port (58) which leads downwardly to said suction valve (52) opens on one side of the cylinder head (51b) and is connected to the carburettor (62);
and an exhaust port (61) which leads downwardly to said exhaust valve (53) and opens in such a way that an extension of the centre line (61a) of the exhaust port (61) crosses diagonally from above the horizontal plane (100) which contains the axis (51d) of said horizontally disposed cylinder, characterised in that:
said extension of said centre line (61a) of the exhaust port (61) extends through the centre of said exhaust valve (53);
said suction port (58) extends between a pair of push rods (54,55) disposed respectively in upper and lower parts of the cylinder head (51b);
an ignition plug socket (69) for an ignition plug (68) is disposed on the cylinder head beneath the exhaust port (61) and on the opposite side of the cylinder head (51b) to that containing the suction port (58); and
the exhaust muffler (65) is of curved configuration and is fixed directly to the exhaust port at an upper surface of the cylinder head (51b), with a gasket (72) therebetween but without an intermediate exhaust pipe;
the engine side of the said curved exhaust muffler (65) being arranged over and close to one side of said cylinder head (51b) so as to serve as a guide for directing cooling air over said exhaust port (61) and said plug (68).

## Patentansprüche

1. Senkrechter Verbrennungsmotor mit in einem Zylinderkopf eingebauten oben hängenden Ventilen, einer senkrecht eingebauten Kurbelwelle und einem waagerecht eingebauten Zylinder, umfassend einen auf einer Seite des Zylinders angeordneten Vergaser (62), einen auf der anderen Seite des Zylinders gegenüber dem Vergaser angeordneten Auspuffgeräuschdämpfer (65),
ein Ansaugventil (52), das in einem unteren Teil des Zylinderkopfes (51b), und ein Auslaßventil (53), das in einem oberen Teil des Zylinderkopfes (51b) angeordnet ist; wobei eine Ansaugöffnung (58), die nach unten zu dem genannten Ansaugventil (52) verläuft, auf einer Seite des Zylinderkopfes (51b) offen und mit dem Vergaser (62) verbunden ist;
und eine Auslaßöffnung (61), die nach unten zu dem genannten Auslaßventil (53) führt und auf eine solche Weise öffnet, daß eine Verlängerung der Mittellinie (61a) der Auslaßöffnung (61) diagonal von einer Stelle oberhalb der Horizontalen (100) verläuft, die die Achse (51d) des genannten waagerecht angeordneten Zylinders beinhaltet, dadurch gekennzeichnet, daß
die genannte Verlängerung der genannten Mittellinie (61a) der Auslaßöffnung (61) durch die Mitte des genannten Auslaßventils (53) verläuft;
die genannte Ansaugöffnung (58) zwischen einem Paar Stößelstangen (54, 55) verläuft, die jeweils im oberen und im unteren Teil des Zylinderkopfes (51b) eingebaut sind;
eine Zündkerzenfassung (69) für eine Zündkerze (68) an dem Zyiinderkopf unterhalb der Auslaßöffnung (61) und auf der Seite eingebaut ist, die der Seite des Zylinderkopfes (51b) gegenüberliegt, die die Ansaugöffnung (58) aufweist; und
der Auspuffgeräuschdämpfer (65) eine gekrümmte Form hat und unmittelbar an der Auslaßöffnung an einer Oberseite des Zylinderkopfes (51b) mit einer Dichtung (72) dazwischen, aber ohne Zwischenauspuffrohr montiert ist;
die Motorseite des genannten gekrümmten Auspuffgeräuschdämpfers (65) über und nahe an der Seite des genannten Zylinderkopfes (51b) angeordnet ist, um als Führung beim Leiten der Kühlluft über die genannte Auslaßöffnung (61) und der genannten Zündkerze (68) zu dienen.

## Revendications

1. Moteur à combustion interne verticale présentant des soupapes en tête placées dans une tête de cylindre, un arbre coudé placé verticalement et un cylindre placé horizontalement, et comportant un carburateur (62) disposé sur un côté du cylindre, un pot d'échappement (65) placé sur l'autre côté du cylindre, en face du carburateur,
un clapet d'aspiration (52) disposé dans une partie inférieure de la tête de cylindre (51b) et une soupape d'échappement (53) est disposée dans une partie supérieure de la tête de cylindre (51b); un orifice d'aspiration (58), qui se dirige vers le bas jusqu'audit clapet d'aspiration (52), donne sur un côté de la tête de cylindre (51b) et est relié au carburateur (62);
un orifice d'échappement (61) qui se dirige vers le bas jusqu'à ladite soupape d'échappement (53) et s'ouvre d'une manière telle qu'une extension de la ligne centrale (61a) de l'orifice d'échappement (61) coupe diagonalement, depuis le dessus, le plan horizontal (100) qui contient l'axe (51d) dudit cylindre disposé horizontalement, caractérisé en ce que:
ladite extension de ladite ligne centrale (61a) de l'orifice d'échappement (61) s'étend au travers du centre de ladite soupape d'échappement (53);
ledit orifice d'aspiration (58) s'étend entre une paire de tiges poussoirs (54,55) disposées respectivement dans la partie supérieure et la partie inférieure de la tête de cylindre (51b);
une douille de bougie d'allumage (69) pour une bougie d'allumage (68) est disposée sur la tête de cylindre sous l'orifice d'échappement (61) et sur le côté de la tête de cylindre (51b) opposé à celui contenant l'orifice d'aspiration (58); et le pot d'échappement (65) est d'une configuration recourbée et est fixé directement sur l'orifice d'échappement sur une surface supérieure de la tête de cylindre (51b), avec un joint d'étanchéité (72) entre eux mais sans conduite d'échappement intermédiaire;
le côté moteur dudit pot d'échappement (65) recourbé étant disposé au dessus et près d'un côté de ladite tête de cylindre (51b) de manière à servir de guide pour diriger l'air de refroidissement au dessus dudit orifice d'échappement (61) et de ladite bougie (68).
